**Europäisches Patentamt**

**European Patent Office**

**Office européen des brevets**

(11) Veröffentlichungsnummer : **0 361 245 B1**

(19)

(12) **EUROPÄISCHE PATENTSCHRIFT**

(45) Veröffentlichungstag der Patentschrift :
**29.07.92 Patentblatt 92/31**

(51) Int. Cl.⁵ : **F16J 15/44, F01D 11/02**

(21) Anmeldenummer : **89117174.6**

(22) Anmeldetag : **16.09.89**

(54) **Wellenabdichtung bei Turbomaschinen.**

(30) Priorität : **24.09.88 DE 3832560**

(43) Veröffentlichungstag der Anmeldung :
**04.04.90 Patentblatt 90/14**

(45) Bekanntmachung des Hinweises auf die
Patenterteilung :
**29.07.92 Patentblatt 92/31**

(84) Benannte Vertragsstaaten :
**CH DE FR GB IT LI**

(56) Entgegenhaltungen :
**DE-B- 1 226 379**
**GB-A- 2 092 242**
**PATENT ABSTRACTS OF JAPAN, vol. 6, no
260; 18 Dec. 1982 (M-180)[1138] & JP-A-57 154
562 (HITACHI); 24. Sept. 1982**

(73) Patentinhaber : **MTU MOTOREN- UND
TURBINEN-UNION MÜNCHEN GMBH
Dachauer Strasse 665 Postfach 50 06 40
W-8000 München 50 (DE)**

(72) Erfinder : **Weiler, Wolf
Robert-Koch-Strasse 11
W-8060 Dachau (DE)**

## Beschreibung

Einrichtung zur Abdichtung von durch Medien, wie Flüssigkeiten und/oder Gasen unterschiedlichen Drukkes beaufschlagten Räumen, insbesondere zwischen Wellen bei Turbomaschinen (Siehe z.B. GB-A- 2 092 242).

Diese GB- Schrift zeigt eine Einrichtung zur Abdichtung von durch Medien, wie Flüssigkeiten und/oder Gasen unterschiedlichen Druckes beaufschlagten Räumen, wobei eine Sekundärdichtung durch Andrückung eines Dichtringes an Abschnitte eines den letzteren aufnehmenden zylindrischen Gehäuses und eine Primärdichtung als Radialspalt zwischen dem Dichtring und einer Welle (1) ausgebildet wird, wobei der Dichtring in Radialrichtung über einen Verband vorgespannter Biegefedern am Gehäuse zentriert ist, und wobei der Radialspalt so bemessen ist, daß bei vorgegebener Druckdifferenz zwischen beiden Räumen ein luftlagerartiger Tragspalt ausgebildet ist.

In der Praxis bereitet es Schwierigkeiten, Dichtungen der genannten Art berührungsfrei arbeiten zu lassen und zugleich mit verhältnismäßig geringer axialer Baulänge ausbilden zu können. Dies gilt insbesondere für Dichtstellen zwischen mit unterschiedlichen Drehzahlen und/oder Drehrichtungen, um eine gemeinsame Achse rotierende Rotorbauteile bzw. betreffende Wellensysteme.

Für Dichtaufgaben der eingangs genannten Art werden im allgemeinen hinlänglich bekannte Labyrinthdichtungen eingesetzt. Bekannte Dichtungstypen, z. B. Bürstendichtungen oder radiale Gleitringdichtungen, versagen u. a. durch im Betrieb auftretende Fliehkraftdeformationen, hier also z. B. bei der Bürstendichtung als Folge der Deformation der Borsten, die mit betreffenden freien Enden eine zugehörige Welle bzw. einen Wellenabschnitt abdichtend tangieren; z. B. bei der genannten Bürstendichtung mit gegen die Welle gerichteten Borstenenden ergibt sich ein Abrieb betreffender Anlaufbeläge auf der Welle; ferner sind beim Betrieb Zerstörungen der Dichtringe infolge von Unwuchtkräften nicht auszuschließen, was sowohl für die hinlänglich bekannten radialen Gleitringdichtungen gilt wie aber auch für schon vorgeschlagene Dichtungskonzepte, bei denen eine Bürstendichtung in Kombination mit einem Innenring als gleitendem Dichtungsring ausgeführt ist.

Der Erfindung liegt die Aufgabe zugrunde, eine Einrichtung nach der eingangs genannten Art zu schaffen, die unter Gewährleistung einer kurzen axialen Baulänge, im Hinblick auf betriebsbedingte Einflüsse, insbesondere Unwuchten und Fliehkräfte, weder wellen- oder dichtringseitig nennenswerten Verschleiß und Materialabrieb hervorruft.

Die gestellte Aufgabe ist mit den Merkmalen des Kennzeichnungsteils des Anspruchs 1 erfindungsgemäß gelöst.

Aus der erfindungsgemäßen Einrichtung zur Abdichtung ergeben sich zusammengefaßt hauptsächlich folgende Vorteile:
 – axial kurze Baulänge
 – Berührungsfreiheit zwischen den beiden betreffenden Rotor-bzw. Wellensystemen
 – Drehrichtungsunabhängigkeit
 – Montagefreundlichkeit
 – Dichtwirkung wie eine radiale Gleitringdichtung mit stehendem Gehäuse, d. h., es wird lediglich ein Durchfluß benötigt, der etwa 10 % einer äquivalenten Labyrinthdichtung entspricht.

Die erfindungsgemäße Dichtung könnte im übrigen auch im wesentlichen als Spaltdichtung bezeichnet werden (im angelsächsischen Sprachgebrauch "Clearance Seal" genannt), und zwar in Kombination mit einem durch einen Biegefederverband zentrierten Dicht- bzw. Gleitring mit folgendem prinzipiellen Aufbau.

Bei der Einrichtung soll konzentrisch zu einer betreffenden inneren Welle ein Dichtring so angeordnet sein, daß zwischen innerer Welle und Dichtring ein Spalt entsteht, dessen Spaltweite in der Luftlagern bekannten Größenordnung angesiedelt ist. Daraus folgt, daß der Dichtring wie ein Luftlager statischen und dynamischen Desaxiationen zur Wellenmitte folgt, solange dessen aus seiner Rotation resultierende Unwuchtkräfte kleiner als die Luftlagerkraft sind. Der betreffende Dichtring seinerseits kann dabei über eine Druckplatte oder dergleichen und eine Druckfeder an die eine Stirnseite des vorzugsweise ebenfalls rotierenden zylindrischen Gehäuses angedrückt sein. Dabei ist der Dichtring radial durch einen Verband vorgespannter Biegefedern gegen den zylindrischen Abschnitt des Dichtungsgehäuses abgestützt und somit elastisch zu diesem zentriert. Aufgabe des Federverbandes ist es, insbesondere in der Anfahr- und Auslaufphase den Dichtring zum Gehäuse zu zentrieren und Unwuchtkräfte durch Desaxiationen solange zu vermeiden, bis die Luftlagerkraft, resultierend aus der Relativbewegung von Welle und Dichtring, dessen Zentrierung zur Welle übernimmt.

Gemäß der Erfindung soll dabei die betreffende Dimensionierung des radial wirkenden Biegefederverbandes derart vorgenommen werden, daß im Betriebsbereich der Maschine mit der erfindungsgemäßen Dichtung die Beziehung $F_{CF} < F_B < F_{LL}$ erfüllt wird. Dabei ist $F_{CF}$ die Unwuchtkraft des Dichtringes aus der Rotation um seine geometrische Drehachse, $F_B$ die resultierende Kraft des Biegefederverbandes und $F_{LL}$ die Luftlagerkraft des Dichtringes.

Da durch Bauteilabweichungen bedingte statische Desaxiationen der beiden Wellensysteme, die größer als die Spaltweite zwischen innerer Welle und Dichtring sind, praktisch unvermeidbar sind, ist während Anfahr- und Auslaufzuständen der erfindungsmäßen Dichtungseinrichtung ein Gleiten des Dichtringes auf der betreffenden inneren Welle nicht auszuschließen bzw. möglich. Durch entsprechende Werkstoffwahl und Oberflächenbehandlung der rotatorisch miteinander korrespondierenden Bauteile ist dieser zuletzt genannte Zustand sicher beherrschbar, wie dies auch unter anderem aus dem erfolgreichem Einsatz hinlänglich bekannter radialer Gleitringdichtungen mit stehendem Gehäuse (außen) aufgezeigt ist.

Anhand der Zeichnungen ist die Erfindung beispielsweise weiter erläutert; es zeigen:

Fig. 1 einen Mittellängsschnitt der oberen Hälfte der Einrichtung unter Zuordnung eines abgebrochenen dargestellten Wellenabschnitts und

Fig. 2 einen endseitig teilweise abgebrochen dargestellten Querschnitt der betreffenden Einrichtung nach Fig. 1, und zwar in Höhe des zugehörigen Dichtringes gesehen.

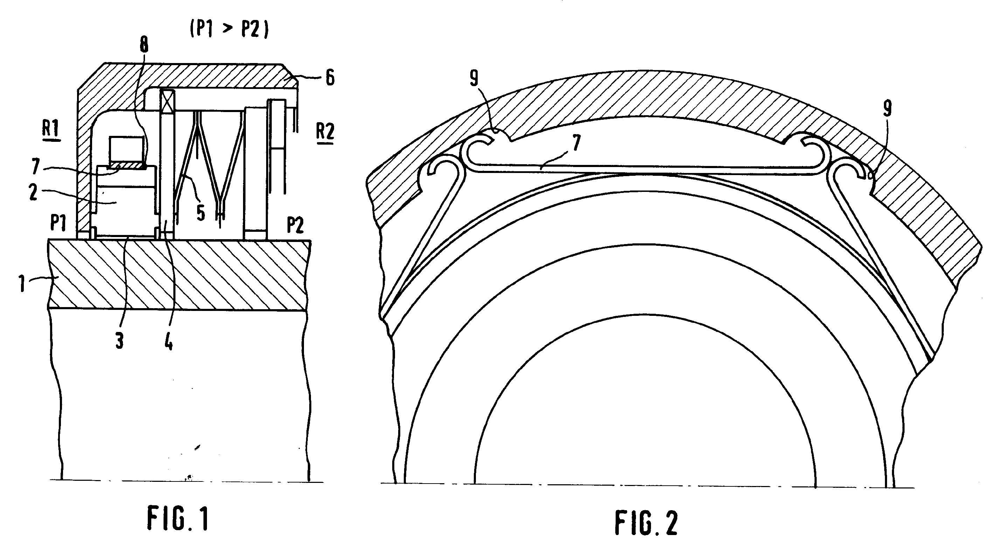

Gemäß Fig. 1 sind die gegeneinander abzudichtenden Räume mit R1 bzw. R2 bezeichnet; bei der betreffenden Einrichtung wird eine Sekundärdichtung durch axial federnde Andrückung eines Dichtringes 2 an die betreffenden Gegenabschnitte eines den letzteren aufnehmenden zylindrischen Gehäuses 6 ausgebildet; eine Primärdichtung wird durch einen Radialspalt 3 zwischen dem Dichtring 2 und einer hier inneren Welle 1 ausgebildet. Im Beispiel nach Fig. 1 und Fig. 2 wird davon ausgegangen, daß der Druck P1 im Raum R1 vor dem betreffenden Dichtring 2 bzw. Dichtspalt 3 größer als der Druck P2 im Raum R2 hinter der betreffenden Einrichtung bzw. dem Dichtring 2 ist. Dabei ist der Dichtring 2 uber eine mittels einer hier tellerartigen Feder 5 belasteten, am Gehäuse 6 beweglich verankerten Druckplatte 4 gegen eine Gehäusestirnseite gedrückt; ferner soll der Dichtring 2 in Radialrichtung über einen Verband vorgespannter Biegefedern 7 am Gehäuse 6 unter elastischer Abstützung zentriert sein. Dabei soll der Radialspalt 3 so bemessen sein, daß bei vorgegebener Druckdifferenz P1 > P2 zwischen beiden Räumen R1, R2 ein luftlagerartiger Tragspalt im Betrieb ausgebildet wird; ferner soll die Dimensionierung des Verbandes aus vorgespannten Biegefedern 7 nach der Beziehung $F_{CF} < F_B < F_{LL}$ erfolgen, worin $F_{CF}$ die Unwuchtkraft des Dichtringes 2 aus der Rotation um seine geometrische Drehachse, $F_B$ die resultierende Kraft des Biegefederverbandes und $F_{LL}$ die Luftlagerkraft des Dichtringes 2 ist.

Wie ferner aus Fig. 1 und 2 ersichtlich ist, sollen die Biegefedern 7 balkenartig gleichförmig über dem Umfang verteilt sowie abschnittsweise in einer äußeren Umfangsnut 8 des Dichtringes 2 angeordnet sein; dabei sollen die betreffenden Biegefedern 7 mit gegeneinander abgebogenen äußeren Enden an Axialaussparungen 9 (Fig. 2) des Gehäuses 6 beweglich aneinander abgestützt sein.

Die zur Andrückung des Dichtringes 2 am Gehäuse 6 verwendete Federkraft kann im übrigen ferner beispielsweise durch Membranen oder Tellerfedern in geeigneter Weise aufgebracht werden; auch die Verwendung mehrer in gleichförmigen Abständen über dem Umfang verteilt angeordneter Spiralfedern wäre durchaus praktisch und sinnvoll.

Zu Fig. 1 und 2 wäre ferner zu vermerken, daß das betreffende zylindrische Gehäuse 6 mit einer Maschinenwelle verbunden werden kann, die in der bei Gasturbinen oder dergleichen üblichen Weise als Gasgeneratorwelle die schon genannte innere Welle 1, z. B. die Welle eines Niederdrucksystems des Triebwerkes, koaxial ummanteln kann.

Die erfindungsgemäße Dichtungseinrichtung erfüllt auch dann einwandfreie Dichtungsvoraussetzungen, wenn es darum geht, z. B. Lagerräume in Gasturbinen gegen den Triebwerkseinlauf bzw. die Umgebung oder gegen den Abgasstrom abzudichten, also Lagerräume die üblicherweise ein niedrigeres Druckniveau haben als der Lagerraum vor der betreffenden Dichtung.

## Patentansprüche

1. Einrichtung zur Abdichtung von durch Medien, wie Flüssigkeiten und/oder Gasen unterschiedlichen Druckes beaufschlagten Räumen (R1; R2), insbesondere zwischen mit unterschiedlichen Drehzahlen und/oder Drehrichtungen umlaufenden Wellen bei Turbomaschinen, wobei eine Sekundärdichtung durch axial federnde Andrückung eines Dichtringes (2) an Abschnitte eines den letzteren aufnehmenden zylindrischen Gehäuses (6) und eine Primärdichtung als Radialspalt (3) zwischen dem Dichtring (2) und einer Welle (1) ausgebildet wird, wobei :

– der Dichtring (2) in Radialrichtung über einen Verband vorgespannter Biegefedern (7) am Gehäuse (6) unter elastischer Abstützung zentriert ist,

– der Radialspalt (3) so bemessen ist, daß bei vorgegebener Druckdifferenz (P1 > P2) zwischen beiden Räumen (R1; R2) ein luftlagerartiger Tragspalt ausgebildet ist,

– die Dimensionierung des Verbandes aus vorgespannten Biegefedern (7) nach der Beziehung $F_{CF} < F_B$

< $F_{LL}$ erfolgt, worin $F_{CF}$ die Unwuchtkraft des Dichtringes (2) aus der Rotation um seine geometrische Drehachse, $F_B$ die resultierende Kraft des Biegefederverbandes und $F_{LL}$ die Luftlagerkraft des Dichtringes (2) ist.

2. Einrichtung nach Anspruch 1, dadurch gekennzeichnet, daß die Biegefedern (4) balkenartig gleichförmig über dem Umfang verteilt sowie abschnittsweise in einer äußeren Umfangsnut (8) des Dichtringes (2) angeordnet sind und ferner mit gegeneinander abgebogenen Enden an Axialaussparungen (9) des Gehäuses (6) beweglich aneinander abgestützt sind.

3. Einrichtung nach Anspruch 1 oder 2, dadurch gekennzeichnet, daß der Dichtring (2) an der stromaufwärtigen und an der stromabwärtigen Seite abgedichtet ist (Sekundärdichtung) und dabei über eine federbelastete, am Gehäuse (6) axial beweglich verankerte Druckplatte (4) gegen eine Gehäusestirnseite gedruckt ist.

## Claims

1. An arrangement for sealing spaces (R1, R2) which are exposed to media such as fluids and/or gases at various pressures, particularly spaces between shafts rotating at different speeds and/or in different directions in turbo-engines, a secondary seal being provided by axially resilient pressure of a sealing ring (2) on portions of a cylindrical housing (6) accommodating the latter and a primary seal being provided as a radial gap (3) between the sealing ring (2) and a shaft (1), in which:
   – the sealing ring (2) is centred and resiliently braced on the housing (6) in a radial direction by an assembly of pre-tensioned flexural springs (7),
   – the radial gap (3) is so dimensioned that for a given pressure differential (P1 > P2) between the two spaces (R1, R2) a supporting gap is formed which is like an air bearing,
   – the dimensioning of the assembly of pre-tensioned flexural springs (7) satisfies the relationship $F_{CF} < F_B$ < $F_{LL}$, in which $F_{CF}$ is the imbalance force of the sealing ring (2) from rotation about its geometrical axis of rotation, $F_B$ is the resulting force of the flexural spring assembly and $F_{LL}$ is the air bearing force of the sealing ring (2).

2. An arrangement according to Claim 1, characterised in that the flexural springs (4) are distributed evenly like beams over the periphery and have portions disposed in an outer peripheral groove (8) of the sealing ring (2) and have ends bent over towards one another and supported for movement on one in axial recesses (9) in the housing (6).

3. An arrangement according to Claim 1 or 2, characterised in that the sealing ring (2) is sealed on the upstream and on the downstream side (secondary seal), being pressed thereby against an end wall of the housing by a spring-loaded pressure plate (4) which is anchored for axial movement on the housing (6).

## Revendications

1. Dispositif pour créer une étanchéité entre des espaces (R1 ; R2) sollicitées par des fluides, tels que des liquides et/ou des gaz à des pressions différentes, en particulier entre des arbres de turbomachines tournant à des vitesses différentes ou dans des sens différents, dans lequel d'une part une étanchéité secondaire est constituée par un anneau d'étanchéité (2) appliqué par une pression élastique sur des sections d'un boîtier cylindrique (6) recevant ce dernier, d'autre part une étanchéité primaire est constituée par une fente radiale (3) entre l'anneau d'étanchéité (2) et un arbre (1),
   – l'anneau d'étanchéité (2) étant centré par rapport au boîtier par un assemblage de ressorts de flexion précontraints qui assurent un appui élastique,
   – la fente radiale (3) étant dimensionnée de telle sorte que, pour une différence de pression donnée (P1 > P2) entre les deux espaces (R1 ; R2) elle joue le rôle de fente porteuse à la manière d'un palier à air,
   – caractérisé en ce que le dimensionnement de l'assemblage des ressorts de flexion précontraints (7) soit la relation $F_{CF} < F_B < F_{LL}$, dans laquelle $F_{CF}$ est le balourd de l'anneau d'étanchéité (2) résultant de sa rotation autour de son axe géométrique, $F_B$ la résultante des forces du système des ressorts de flexion et $F_{LL}$ la force portante du palier à air au niveau de l'anneau d'étanchéité (2).

2. Dispositif selon la revendication 1, caractérisé en ce que les ressorts de flexion (4) en forme de lames sont également répartis à la périphérie et sont disposés par lots dans une gorge périphérique externe (8) de l'anneau d'étanchéité (2) et reposent, en restant mobiles en appui les uns contre les autres, dans des encoches axiales (9) du boîtier (6), par leurs extrémités recourbées.

3. Dispositif selon la revendication 2, caractérisé en ce que l'anneau d'étanchéité (2) est étanche du côté amont du flux comme du côté aval (étanchéité secondaire), et qu'il est appliqué contre la face frontale du boîtier par l'action d'une plaque de pression (4) mobile axialement chargée par ressorts.

$(P1 > P2)$

FIG.1

FIG.2

EP 0 361 245 B1